# DEMANDE DE BREVET EUROPEEN

(11) **EP 2 602 728 A1**
(43) Date de publication de la demande: **12.06.2013**
(21) Numéro de dépôt: 12194449.0
(22) Date de dépôt: 27.11.2012
(51) Int. Cl.: G06F 17/30, H04N 21/00, G06Q 30/02, G06F 21/31

(54) **Dispositif et procédé de sélection et de mise à jour du profil d'un utilisateur.**

(30) Priorité: 05.12.2011 FR 1161146
(71) Demandeur: France Télécom, 75015 Paris (FR)
(72) Inventeur: Gloanec, Simon, 35000 RENNES (FR); Baranski, Fabrice, 35000 RENNES (FR)

(57) **Abrégé**

L'invention se rapporte à un procédé de sélection d'un profil utilisateur parmi plusieurs profils utilisateurs (P1, P2). Les profils utilisateurs comportent respectivement un ensemble de données relatives à des utilisateurs (P1_1, P2_1). Les profils sont aptes à être accédés par un terminal (T1) apte à restituer un contenu multimédia (7). Des données de description (M7) sont associées au contenu (7). Le procédé est tel qu'il sélectionne au moins une donnée de description (M7_actor), compare ladite donnée de description (M7_actor) à au moins une donnée (P2_1, P2_2) des ensembles de données des profils (P1, P2); puis, selon les résultats de l'étape de comparaison (E4, E5), un profil (P1) est sélectionné (E6, Pi).

L'invention se rapporte également à un dispositif de sélection d'un profil utilisateur apte à être installé dans un terminal (T1) apte à restituer un contenu multimédia (7).

## Description

### Domaine technique

L'invention se rapporte à un procédé de sélection d'un profil utilisateur sur un terminal partagé par plusieurs utilisateurs, plus simplement désigné dans la suite par l'appellation « terminal multi-utilisateurs ».

L'invention se rapporte tout particulièrement à des terminaux appartenant aux équipements de l'électronique grand public et plus précisément les dispositifs mobiles intégrant des capacités de stockage de contenus numériques, par exemple des lecteurs multimédia aptes à restituer des contenus audio-visuels (vidéo MP4, audio MP3), ou de nouveaux systèmes multimédia embarqués dans les automobiles, ou encore des passerelles domestiques auxquelles accèdent plusieurs terminaux multimédia. L'invention vise en particulier de tels terminaux lorsqu'ils sont partagés par plusieurs utilisateurs. Elle s'applique dans ce contexte à la sélection du profil d'un utilisateur parmi tous les profils de tous les utilisateurs du terminal.

### Etat de la technique

Certains terminaux, par exemple les ordinateurs personnels ou des terminaux mobiles familiaux dédiés à restituer des contenus multimédia, ou encore des passerelles domestiques (aussi appelées *Boxes*)*,* sont amenés à être utilisés par plusieurs personnes.

Lorsque plusieurs utilisateurs partagent ainsi le même terminal, il est habituel d'associer à chacun des utilisateurs un profil utilisateur, dans le but de le distinguer des autres utilisateurs. Un tel profil utilisateur comporte généralement des caractéristiques de préférence de l'utilisateur. Il peut être utilisé à diverses fins. Il peut être exploité par un moteur de recherche pour une recherche personnalisée, suivie éventuellement d'un téléchargement de contenus multimédia personnalisés correspondant aux préférences de l'utilisateur (par exemple, des vidéos dans lesquelles joue un certain acteur). Il peut également être utile dans le domaine des ventes en ligne, ou proposition de services en ligne, où les produits ou services proposés à l'utilisateur sont recherchés puis sélectionnés en fonction des préférences (par exemple un type de produit) indiquées dans le profil utilisateur.

Afin de réaliser une telle action de recherche, un profil utilisateur doit donc être sélectionné parmi tous les profils utilisateurs disponibles sur le terminal. Or aujourd'hui, il n'existe pas de mécanisme automatique pour réaliser une telle sélection. L'utilisateur qui prend possession du terminal doit entrer son identifiant et son mot de passe pour que le terminal le reconnaisse et que son profil utilisateur soit subséquemment utilisé à des fins de recherche ou de téléchargement, ou toute autre action relative à l'utilisateur.

L'invention offre une solution ne présentant pas les inconvénients de l'état de la technique.

### L'invention

A cet effet, selon un aspect fonctionnel, l'invention a pour objet un procédé de sélection d'un profil utilisateur parmi au moins deux profils utilisateurs comportant, respectivement, un ensemble de données relatives à des utilisateurs, lesdits profils étant aptes à être accédés par un terminal apte à restituer un contenu multimédia auquel est associée au moins une donnée de description, **caractérisé en ce qu'il** comporte les étapes de :
- Sélection d'au moins une donnée de description relative à un contenu multimédia apte à être restitué par le terminal,
- Comparaison de ladite au moins une donnée de description sélectionnée à au moins une donnée des ensembles de données des profils;
- Et, selon les résultats de l'étape de comparaison, sélection d'un profil utilisateur.

Ainsi, l'invention offre l'avantage de dispenser l'utilisateur de sélectionner lui-même son profil : lorsque l'utilisateur choisit un contenu à consommer. Par consommation, on entend par exemple le décodage et/ou la restitution d'un contenu numérique audio-visuel. Le procédé de l'invention sélectionne une ou plusieurs données, aussi appelées métadonnées, descriptives de ce contenu à consommer (par exemple, le titre d'une chanson et son compositeur) puis compare cette description aux différents profils des différents utilisateurs dont le profil est connu du terminal multi-utilisateurs. Le profil le plus proche de la description (par exemple, le profil qui contient le nom de ce compositeur) est sélectionné automatiquement, évitant ainsi à l'utilisateur la démarche fastidieuse de rentrer son identifiant et son mot de passe.

Selon un mode de mise en oeuvre particulier de l'invention, un procédé tel que décrit ci-dessus inclut en outre, à l'issue de l'étape de sélection d'un profil, une étape de recherche de contenus multimédia complémentaires relatifs à ce profil.

Ce mode de mise en oeuvre de l'invention permet de rechercher les contenus multimédia, les plus pertinents pour un utilisateur, en fonction des préférences exprimées dans son profil. Ces contenus, le plus souvent numériques, peuvent correspondre par exemple aux références d'un service (pour l'achat d'un produit) ou à un contenu multimédia (une chanson du même compositeur, une vidéo dans laquelle joue son acteur favori...) en relation avec le profil utilisateur sélectionné. Ces données complémentaires, correspondant aux préférences de l'utilisateur, peuvent être utilisées pour lui proposer des services ou mettre à jour sa base de contenus audio-visuels, comme il sera décrit dans le mode de réalisation préféré. Ainsi, le procédé de l'invention permet-il de copier automatiquement de nouveaux contenus d'intérêt pour l'utilisateur dans son dispositif mobile.

Selon un deuxième mode de mise en oeuvre particulier de l'invention, qui pourra être mis en oeuvre alternativement ou cumulativement avec le précédent, un procédé tel que décrit plus haut inclut en outre, à l'issue d'une sélection d'un profil, une étape de mise à jour du profil à partir de ladite au moins une donnée de description sélectionnée.

Ce mode de mise en oeuvre de l'invention permet de mettre automatiquement à jour le profil de l'utilisateur, de façon transparente pour lui. Le nouveau profil utilisateur ainsi mis à jour pourra servir à sélectionner de nouveaux contenus lors d'une recherche ultérieure, afin de proposer d'autres services à l'utilisateur ou d'enrichir sa base de contenus multimédia, etc.

Selon un aspect matériel, l'invention concerne également un dispositif de sélection d'un profil utilisateur apte à être installé dans un terminal apte à restituer un contenu multimédia, le dispositif comprenant des moyens de sélection d'un profil utilisateur parmi plusieurs profils accessibles par le dispositif, les profils comportant, respectivement, un ensemble de données de profil, **caractérisé en ce qu'il** comporte des moyens de :
- Sélection d'au moins une donnée de description relative à un contenu multimédia apte à être restitué par le terminal;
- Comparaison de ladite au moins une donnée de description sélectionnée à au moins une donnée des ensembles de données des profils ;
- Et selon les résultats de l'étape de comparaison, sélection d'un profil utilisateur.

Selon un autre aspect matériel, l'invention concerne également un terminal comprenant des moyens de restitution de contenu multimédia, **caractérisé en ce qu'il** comprend un dispositif tel que défini ci-dessus.

Ce terminal peut être par exemple un ordinateur, un lecteur de fichiers multimédias, un téléphone mobile, un décodeur TV connecté à un écran de télévision, une tablette sans fil, une radio numérique mobile, ou plus généralement tout terminal multimédia susceptible d'être partagé par plusieurs utilisateurs.

Selon un aspect matériel, l'invention concerne également un terminal tel que décrit ci-dessus, **caractérisé en ce qu'il** comporte des moyens de recherche de contenus numériques complémentaires relatifs à un profil sélectionné.

Selon un autre aspect matériel, l'invention concerne encore un terminal tel que décrit ci-dessus, **caractérisé en ce qu'il** comporte des moyens de mise à jour d'un profil sélectionné à partir d'une donnée de description relative à un contenu multimédia.

Selon encore un autre aspect matériel, l'invention concerne également un programme d'ordinateur comportant des instructions de code pour la mise en oeuvre d'un procédé de sélection d'un profil utilisateur conforme à la description ci-dessus, lorsque celles-ci sont exécutées par un processeur.

Selon encore un autre aspect matériel, l'invention concerne également un support d'enregistrement lisible par un terminal sur lequel est enregistré un programme d'ordinateur comprenant des instructions pour l'exécution des étapes du procédé définies ci-dessus.

Ce dispositif, ce terminal et ce programme d'ordinateur présentent des caractéristiques et avantages analogues à ceux décrits précédemment en relation avec le procédé.

L'invention sera mieux comprise à la lecture de la description qui suit, donnée à titre d'exemple et faite en référence aux dessins annexés.

### Les figures:

La figure 1 illustre le contexte général de l'invention ;
La figure 2 schématise une architecture d'un dispositif de sélection d'un profil utilisateur selon un mode de réalisation de l'invention ;
La figure 3 montre un exemple de métadonnées correspondant aux contenus des fichiers profil et d'un fichier de description d'un contenu vidéo ;
La figure 4 illustre, sous forme d'organigramme, les étapes du procédé de sélection d'un profil utilisateur selon un mode de réalisation de l'invention ;
La figure 5 illustre la mise à jour implicite d'un profil utilisateur selon un mode de réalisation de l'invention; et
La figure 6 illustre, sous forme d'organigramme, les étapes d'un procédé de mise à jour des contenus d'un utilisateur selon un mode de réalisation de l'invention.

### Description détaillée d'un exemple de réalisation illustrant l'invention

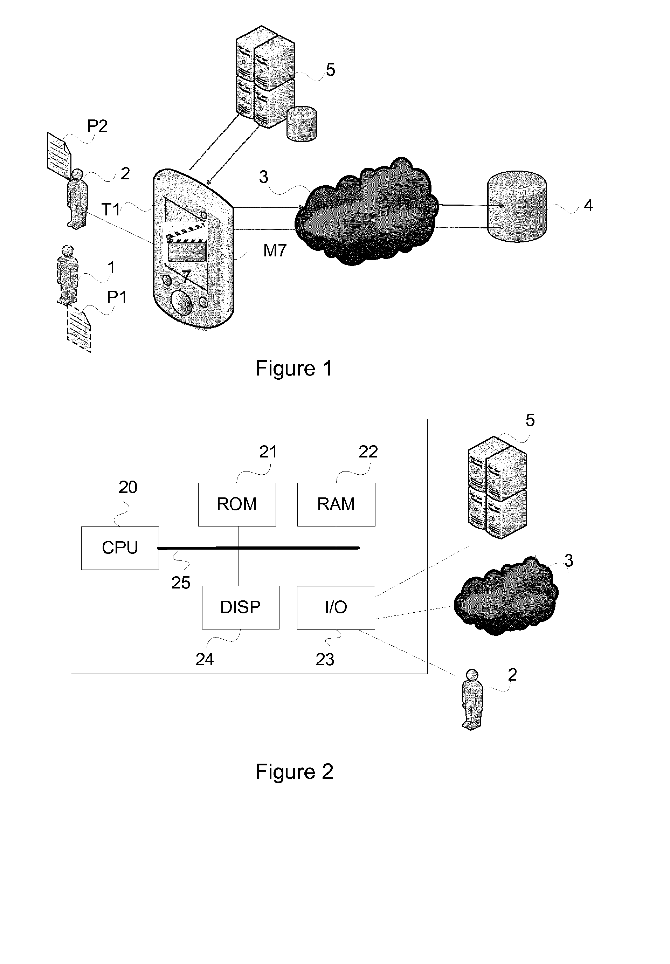

La figure 1 représente le contexte général de l'invention selon un mode de réalisation.

Typiquement, le procédé de l'invention peut être intégré dans un ordinateur, un lecteur de fichiers multimédia, un terminal de communication tel qu'un téléphone mobile, un décodeur TV connecté à un téléviseur, une tablette sans fil, une radio numérique mobile, une passerelle de réseau domestique (*Box*) ou plus généralement tout équipement multimédia amené à être partagé entre plusieurs utilisateurs.

Sur le schéma de la figure 1, le procédé est inclus dans un terminal multimédia mobile (T1) partagé entre deux utilisateurs 1 et 2. Le terminal T1 comporte un écran de visualisation DISP sur lequel sont affichés par exemple les contenus multimédia (audio, vidéo, images, texte...) d'un utilisateur.

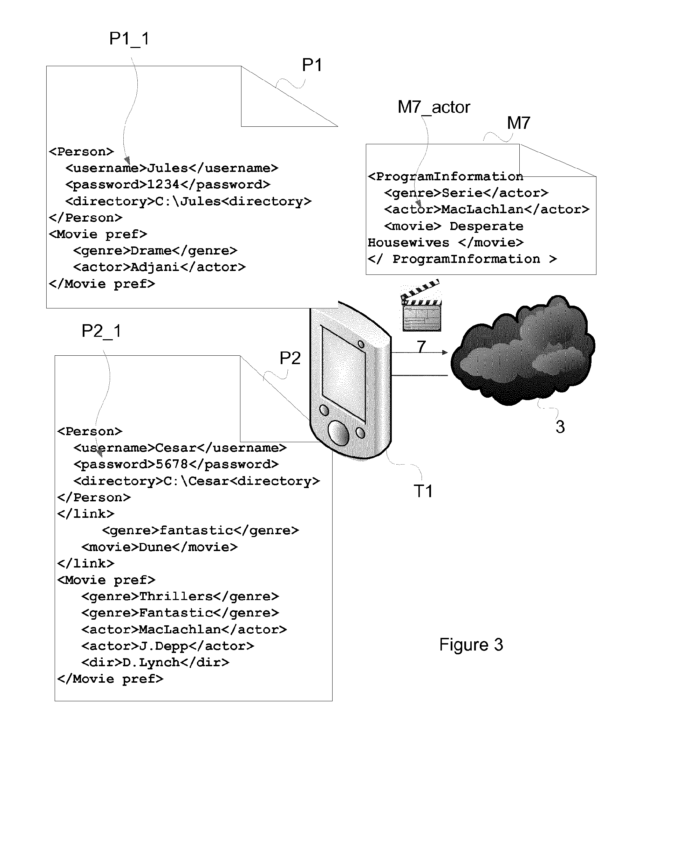

Les utilisateurs 1 et 2, utilisant tous deux le terminal T1 à des moments différents, ont chacun un profil utilisateur associé, mémorisé selon ce mode de réalisation dans la mémoire du terminal T1 comme il sera décrit à l'appui de la figure 2. Un profil utilisateur selon ce mode de réalisation de l'invention est un fichier décrivant les préférences de l'utilisateur, par exemple le fichier P1 pour l'utilisateur 1 et le fichier P2 pour l'utilisateur 2. De tels fichiers seront illustrés à titre d'exemple à l'appui de la figure 3.

On suppose que l'utilisateur 2 (représenté en traits pleins, au contraire de l'utilisateur 1) dispose du terminal et souhaite l'utiliser pour restituer un contenu vidéo 7. Un tel contenu peut être accessible directement dans la mémoire du terminal T1, ou sur une base de données 4 via un réseau de télécommunications 3, ou sur un serveur 5 connecté au terminal, etc. Dans notre exemple, on suppose que le terminal mobile charge une vidéo depuis une base de données distante 4 en se connectant au réseau internet, par exemple via une interface Wifi. Le contenu vidéo 7 est une vidéo numérique. Alternativement, tout contenu multimédia pourrait être utilisé dans le contexte de l'invention (audio, voix, images fixes...). Les données descriptives de cette vidéo, aussi appelées métadonnées, sont par exemple le genre du film (comme « aventure », « comédie », « drame », « fantastique », « série », « animation », etc.), le nom des producteurs de ce film, le nom des auteurs, le nom des acteurs ou encore des mots-clés portant sur l'histoire du film présenté, etc. Si le contenu est de type audio, joué sur une radio FM, il pourra s'agir de métadonnées de type RDS, d'après l'anglais *Radio Data System,* un service de transmission de données numériques diffusées en parallèle des signaux audio de la radio hertzienne FM.

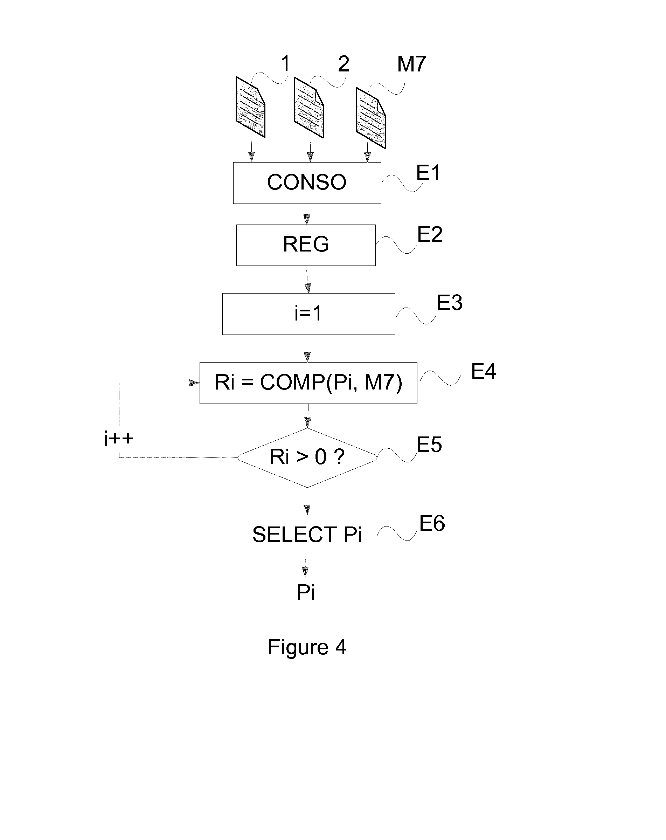

Le terminal T1 de l'invention capture dans un premier temps les métadonnées M7 associées au contenu 7 en cours, par exemple le genre de la vidéo (M7_genre) et celui de l'acteur principal (M7_actor). Puis il compare les métadonnées extraites, M7, aux profils P1 et P2 des utilisateurs. Au cours de cette comparaison, qui sera détaillée par la suite à la figure 4, le dispositif compare les métadonnées extraites aux préférences qui se trouvent dans les deux profils des deux utilisateurs 1 et 2 du terminal. Par exemple, on suppose ici que le profil de l'utilisateur 2, P2, contient le genre extrait dans M7, alors que le profil de l'utilisateur 1, P1, ne contient pas ce genre. C'est donc le profil P2 qui sera sélectionné.

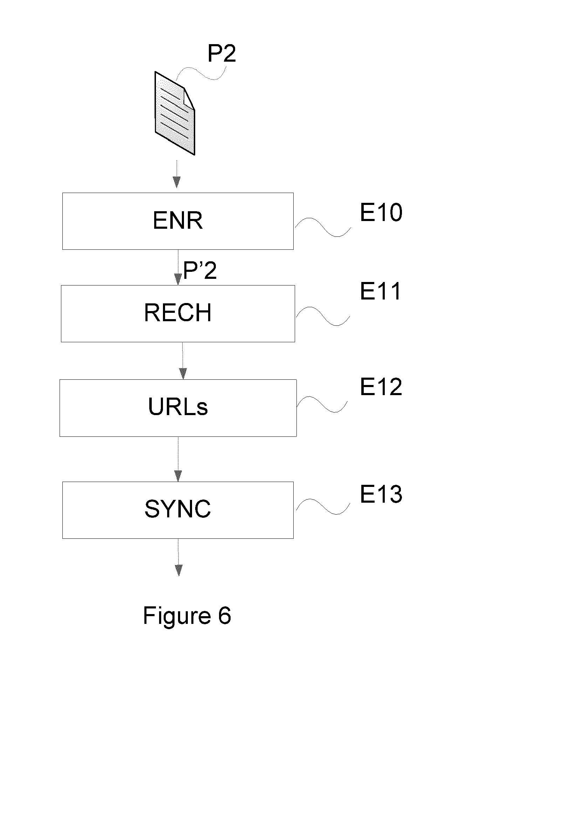

Dans le contexte d'un réseau domestique, le même scénario peut s'appliquer à la passerelle domestique, ou *Box,* qui prend ici le rôle du terminal T1 de la description précédente : Les utilisateurs P1 et P2 sont tous les deux aptes à se connecter sur la passerelle T1 via par exemple une tablette numérique sans fils. La passerelle T1 accède aux contenus numériques par exemple sur un serveur de médias (en anglais, Media Server) ou un disque dur externe (4) et les fournit à l'utilisateur pour visualisation sur sa tablette. Lorsque l'utilisateur P2 se connecte pour visualiser le contenu vidéo 7, le procédé de l'invention, installé sur la passerelle domestique T1, collecte les métadonnées associées au contenu et détermine automatiquement le profil associé à l'utilisateur P2. Comme il sera décrit plus avant à l'appui de la figure 6, cette information peut être utilisée pour mettre à jour ou enrichir le profil de l'utilisateur et éventuellement enrichir le Media Server ou le disque dur (4) par des informations (contenus numériques) propres à l'utilisateur.

La figure 2 schématise une architecture d'un dispositif de sélection d'un profil utilisateur selon un mode de réalisation de l'invention; il s'articule dans cet exemple autour d'un microcontrôleur, comportant classiquement :
- un microprocesseur 20 (CPU) destiné notamment à charger des instructions en mémoire, à les exécuter, à effectuer des opérations ;
- une mémoire volatile 22, ou "RAM" (pour "Random Access Memory") utilisée pour exécuter des instructions de code, stocker des données variables, etc. ;
- une mémoire non volatile 21, de type « ROM » (de l'anglais « Read Only Memory »), destinée à contenir des informations persistantes et notamment des programmes à exécuter par le microprocesseur 20. Elle comprend entre autres les programmes du procédé de l'invention, et également, selon notre mode de réalisation, les fiches de profil (P1 et P2) des utilisateurs. Alternativement ces fichiers peuvent être stockés à l'extérieur du dispositif ;
- un ou plusieurs périphériques d'entrée-sortie (IO) 23 contrôlant notamment les communications avec l'utilisateur (2) via un clavier (non représenté) et un écran (24), avec le PC serveur (5) et avec le réseau de télécommunications (3).
- Les différents modules communiquent classiquement les uns avec les autres par l'intermédiaire d'un ou plusieurs bus de données et d'adresses (25).

La **figure 3** propose un exemple de métadonnées correspondant aux contenus des fichiers de profil (P1, P2) des deux utilisateurs et au fichier de description du contenu vidéo 7 en cours de consommation, M7. Ces deux types de données appartiennent à la famille générale des métadonnées, qui sont classiquement définies comme des « données sur les données ». Les métadonnées des fichiers de profil (P1, P2) sont souvent désignées par l'appellation « préférences utilisateurs ». Les métadonnées de description M7 de contenu, relatives au contenu en cours de consommation par l'utilisateur, peuvent provenir par exemple d'une vidéo numérique diffusée sur une chaîne de télévision numérique. Le guide de programmes (en anglais : EPG pour *Electronic Program Guide*) diffusé avec la chaîne de télévision comprend généralement des métadonnées descriptives des programmes et des contenus diffusés. Elles peuvent être représentées sous la forme de données textuelles ou codées ; elles sont souvent présentées dans un langage de type XML (en anglais « eXtensible Markup Language »). Ce langage XML est un langage de balisage, c'est-à-dire un langage qui présente l'information encadrée par des balises, créé par le consortium W3C (sigle pour World Wide Web Consortium). Ce type de langage permet une mise en forme simple et hiérarchisées des métadonnées. Selon le langage XML, le développeur crée ses propres balises afin d'identifier précisément le contenu des données comprises dans lesdites balises. Cependant il peut aussi se conformer à des schémas préexistants correspondant par exemple aux formats définis par la norme MPEG-7, une norme de I'ISO/IEC qui définit notamment des métadonnées génériques descriptives de contenus audio-visuels, ainsi que des préférences utilisateurs, selon des schémas XML normalisés.

Les tableaux de métadonnées de la figure 3 sont ainsi représentés sous forme de fichiers simples de type XML. Alternativement, on pourrait les représenter sous forme de tableaux de données ou toute autre forme accessible à l'homme du métier. Chaque ligne du fichier XML correspond à un descripteur. Chaque descripteur est classiquement représenté par un couple (attribut, valeur) comportant un attribut entre balises ouvrantes et fermantes et la valeur entre les deux balises. Par exemple, un premier descripteur P1_1 (ligne 1 du tableau de descripteur de P1, <username>Jules</username>) associe un attribut "username" (nom d'utilisateur en français) à une valeur : "Jules". Un autre descripteur, associe l'attribut "genre" à la valeur "drame" pour indiquer que l'utilisateur Jules aime les films dramatiques. Un autre descripteur associe l'attribut "C:\Jules" à la valeur "directory" pour indiquer que l'utilisateur Jules stocke ses contenus multimédia dans le répertoire C:\Jules.

Le tableau de droite représente un exemple de métadonnées M7 associées au contenu 7 en cours de consommation sur le terminal T1. Par exemple, s'il s'agit d'un contenu diffusé sur le réseau de télévision numérique DVB, la norme de diffusion numérique DVB (sigle de l'anglais *Digital Video Broadcast* ) prévoit de telles métadonnées pour accompagner la diffusion des programmes. Selon cet exemple, la vidéo diffusée et restituée sur le terminal T1 est un épisode de série (genre) faisant intervenir un acteur nommé MacLachlan comme indiqué par la balise M7_actor. Les métadonnées M7, une fois reçues, peuvent être par exemple enregistrées temporairement dans la mémoire 22 du dispositif après que celui-ci a reçu le contenu 7 et les métadonnées M7 qui lui sont associées.

La figure 4 illustre, sous forme d'organigramme, les étapes du procédé de sélection d'un profil utilisateur selon un mode de réalisation de l'invention. Lors d'une première étape E1 (Conso), l'utilisateur utilise le terminal T1 de l'invention pour consommer (visualiser) une vidéo. Naturellement, il n'est pas nécessaire que le contenu soit consommé pour la mise en oeuvre de l'invention, mais simplement que l'utilisateur accède aux métadonnées relatives à ce contenu. Selon notre exemple de la figure 3, le contenu est un épisode de série télévisée. Alternativement, l'utilisateur peut aussi écouter la radio FM sur une radio mobile et les métadonnées sont des métadonnées de type RDS.

Après une étape E2 (REG) d'enregistrement des métadonnées dans la mémoire de du terminal, une étape E3 d'initialisation de variables internes présélectionne le profil à analyser. Pour une valeur de variable i, le profil Pi est présélectionné ; dans notre exemple, la variable i est initialisée à 1 et le profil P1 est présélectionné ; puis au cours d'une étape suivante E4, une comparaison est effectuée entre le profil présélectionné Pi et les métadonnées descriptives M7. Cette comparaison peut être faite, en référence à la figure 3, par mise en correspondance des balises équivalentes des deux fichiers XML. Dans notre exemple, aucune des valeurs des balises de métadonnées M7 ne se retrouve dans le profil P1. Si on utilise une échelle de similitude pour calculer le résultat (Ri) de la comparaison, il est donc nul dans ce cas. Le profil P1 n'est pas sélectionné au cours de l'étape E5 qui vérifie le résultat de la comparaison ; le pointeur i de profil est incrémenté et au cours de l'étape E4 précédemment décrite, le profil P2 est présélectionné. Cette fois, l'un des champs des métadonnées M7 (M7_actor), se retrouve dans le profil P2, le résultat R2 de l'étape E4 est donc positif et le test de l'étape E5 devient positif, aboutissant au cours d'une étape E6 qui s'ensuit à la sélection du profil P2. Naturellement, un exemple très simple de mise en correspondance directe a été fourni ici dans un but d'illustration mais tout algorithme de comparaison de profils plus sophistiqué, faisant intervenir notamment des pondérations sur plusieurs champs descriptifs, peut être facilement mis en oeuvre par un homme du métier.

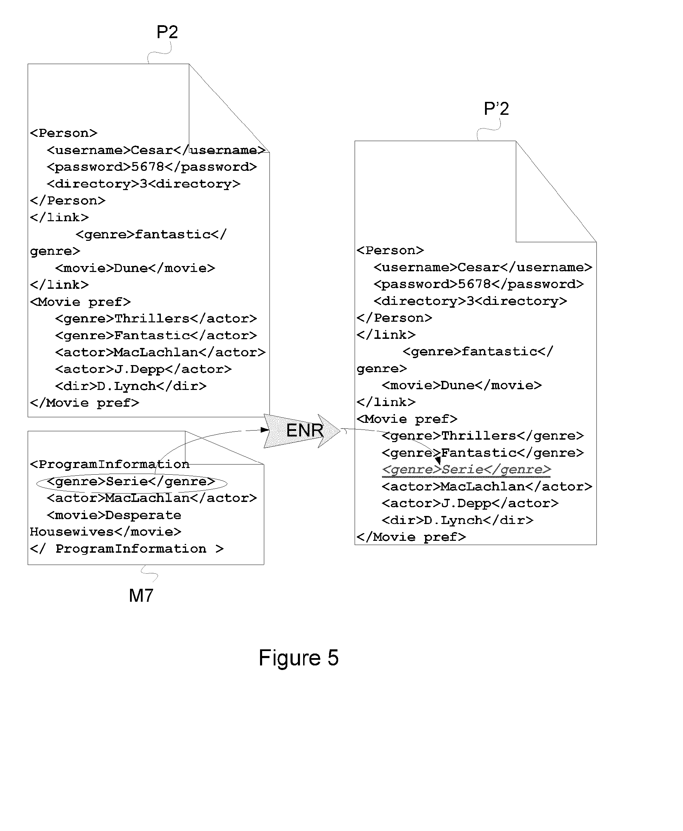

La figure 5 illustre la mise à jour implicite d'un profil utilisateur selon un mode de réalisation de l'invention. Le principe est d'enrichir les métadonnées de l'utilisateur (P2 dans notre exemple) par les métadonnées M7 associées au contenu 7. En variante, toutes les métadonnées pertinentes qui pourraient être trouvées en référence à ce contenu pourront être utilisées pour enrichir le profil sélectionné. Dans notre exemple, le module agrège les informations contenues dans la mémoire en provenance des métadonnées M7 et rajoute ou complète des champs dans le fichier XML de profil P2. De nombreux algorithmes d'enrichissements sont connus, on pourra se référer par exemple à la demande de brevet européen de France Telecom publiée sous le numéro EP1649386 relative à un procédé d'enrichissement de données textuelles de type XML ( *Procédé de formation d'un ensemble d'informations de sortie à partir d'au moins deux ensembles d'informations d'entrée, les informations étant décrites dans un langage de balisage encadrant des éléments des ensembles d'informations*) qui est incorporé par référence. Comme illustré sur la figure 5, l'ensemble de sortie P'2 enrichi comporte, en plus de P2, une balise supplémentaire « genre » qui comporte une valeur « série » en provenance des métadonnées M7.

La figure 6 illustre sous forme d'organigramme les étapes d'un procédé de mise à jour des contenus d'un utilisateur selon un mode de réalisation de l'invention. On suppose ici que l'utilisateur 2, qui se trouvait préalablement en situation de mobilité, rentre chez lui et connecte son terminal T1 au réseau local de son domicile (par exemple en Wifi). Lors d'une étape E10 (ENR), le profil P2 de l'utilisateur est mis à jour selon le procédé d'enrichissement illustré à la figure 5. Naturellement, cette étape peut avoir eu lieu préalablement lorsque l'utilisateur se trouvait en mobilité, ou au moment de la reconnexion du terminal au réseau, ou à tout autre moment adéquat. On suppose que l'on dispose, à l'entrée de l'étape E11, d'un profil enrichi P'2. Lorsque le réseau local (via par exemple sa passerelle, ou un ordinateur connecté au réseau et au terminal de l'invention) détecte la connexion de l'équipement, une recherche de contenus est lancée au cours d'une étape E11 (RECH). Dans ce mode de réalisation de l'invention, on se place dans le contexte d'un réseau local disposant de plusieurs serveurs de données de type UPnP (en anglais : Media Server UPnP) partagés dans le réseau local. Le protocole *Universal Plug and Play* (UPnP) promulgué par l'UPnP Forum permet à des périphériques de se connecter aisément et de simplifier la mise en oeuvre de réseaux dans le contexte d'un réseau local par exemple domestique, et notamment de partager des fichiers multimédia du type de ceux qui nous intéressent ici. Lors de l'étape de recherche E11, qui peut s'exécuter sur le terminal de l'invention, sur la passerelle domestique, ou sur tout autre équipement du réseau, les informations sont par exemple parcourues sur une liste, prédéfinie ou non, de serveurs UPnP présents sur le réseau local ainsi que sur les espaces privés de l'utilisateur (par exemple, le répertoire local de l'utilisateur sur un ordinateur connecté). La recherche de contenus s'effectue alors sur la base de critères créés à partir du profil P'2. A l'étape E12, Les serveurs (Media Servers) UPnP du réseau répondent à cette recherche par une liste d'adresses (URL, de l'anglais *Uniform Resource Locator*) permettant d'accéder aux contenus recherchés correspondant aux critères de sélection (par exemple : le nouveau genre défini dans P'2 par l'étape E10 d'enrichissement de l'invention). Ces adresses sont téléchargées par exemple dans la mémoire du terminal de l'invention ou dans l'ordinateur qui lui est connecté. Une étape E13 de synchronisation (SYNC) est dédiée au parcours des disques dur locaux et partagés et au téléchargement des contenus multimédia correspondant aux adresses (URL) précitées. Les contenus multimédia supplémentaires ainsi obtenus pourront être stockés par exemple dans le répertoire "C:\Jules" précisé par une balise du fichier de profil utilisateur P'2.

Il va de soi que le mode de réalisation qui a été décrit ci-dessus a été donné à titre purement indicatif et nullement limitatif, et que de nombreuses modifications peuvent y être facilement apportées par l'homme de l'art sans pour autant sortir du cadre de l'invention.

Par exemple, en variante, on pourra s'attacher à ajouter au procédé une étape de prise en compte des contraintes de taille et de capacité multimédia du dispositif mobile pour l'enrichissement du profil et la sélection des éléments à copier.

## Revendications

1. Procédé de sélection d'un profil utilisateur parmi au moins deux profils utilisateurs (P1, P2) comportant, respectivement, un ensemble de données (P1_1, P1_2...) relatives à des utilisateurs (1,2), lesdits profils étant aptes à être accédés par un terminal (T1) apte à restituer un contenu multimédia (7) auquel est associée au moins une donnée de description (M7_actor, M7_genre), **caractérisé en ce qu'il** comporte les étapes de :
- Sélection d'au moins une donnée de description (M7_actor) relative à un contenu multimédia (7) apte à être restitué par le terminal (T1) ;
- Comparaison (E4, E5) de ladite au moins une donnée de description sélectionnée (M7_actor) à au moins une donnée (P2_1, P2_1...) des ensembles de données des profils (P1, P2) ;
- Et, selon les résultats de l'étape de comparaison, sélection d'un profil utilisateur (E6, Pi, P2).

2. Procédé de sélection selon la revendication 1, **caractérisé en ce que** l'étape de sélection d'un profil (P2) est suivie d'une étape (E11) de recherche de contenus multimédia complémentaires relatifs à ce profil.

3. Procédé de sélection selon la revendication 1, **caractérisé en ce que** l'étape d'une sélection d'un profil (P2) est suivie d'une étape de mise à jour (E10) du profil (P'2) à partir de ladite au moins une donnée de description sélectionnée (M7_actor).

4. Dispositif de sélection d'un profil utilisateur apte à être installé dans un terminal (T1) apte à restituer un contenu multimédia, le dispositif comprenant des moyens de sélection d'un profil utilisateur (P2) parmi plusieurs profils utilisateurs (P1, P2) accessibles par le dispositif, les profils comportant, respectivement, un ensemble de données de profil (P1_1, P2_2...), **caractérisé en ce qu'il** comporte des moyens de :
- Sélection d'au moins une donnée de description (M7_actor) relative à un contenu multimédia (7) apte à être restitué par le terminal (T1) ;
- Comparaison (E4, E5) de ladite au moins une donnée de description sélectionnée (M7_actor) à au moins une donnée (P1_1, P2_1...) des ensembles de données de profils (P1, P2) ;
- Et selon les résultats de l'étape de comparaison (E4, E5), sélection d'un profil utilisateur (E6, Pi, P2).

5. Terminal (T1) comprenant des moyens de restitution de contenu multimédia, **caractérisé en ce qu'il** comprend un dispositif tel que défini dans la revendication 4.

6. Terminal (T1) selon la revendication 5 **caractérisé en ce qu'il** comporte des moyens de recherche (E11, E12, E13), de contenus numériques complémentaires relatifs à un profil sélectionné (P2).

7. Terminal (T1) selon la revendication 5 **caractérisé en ce qu'il** comporte des moyens de mise à jour d'un profil (E10) sélectionné à partir d'une donnée de description relative à un contenu multimédia (7).

8. Programme d'ordinateur comportant des instructions de code pour la mise en oeuvre d'un procédé de sélection d'un profil utilisateur conforme à la revendication 1, lorsque celles-ci est exécutée par un processeur (20).

9. Support d'enregistrement lisible par un terminal (T1) sur lequel est enregistré un programme d'ordinateur comprenant des instructions pour l'exécution des étapes du procédé de sélection d'un profil utilisateur conforme à la revendication 1.
